# EUROPEAN PATENT SPECIFICATION

(11) **EP 4 337 869 B1**
(45) Date of publication and mention of the grant of the patent: **14.10.2026**
(21) Application number: 22721441.8
(22) Date of filing: 22.04.2022
(51) Int. Cl.: F15B 15/26, B64C 25/22, B64C 25/26

(54) **MECHANICALLY LOCKING ACTUATOR**
MECHANISCH VERRIEGELBARER STELLANTRIEB
ACTIONNEUR À VERROUILLAGE MÉCANIQUE

(30) Priority: 10.05.2021 GB 202106628
(43) Date of publication of application: 20.03.2024
(73) Proprietor: Safran Landing Systems UK Ltd, Gloucester, Gloucestershire GL2 9QH (GB)
(72) Inventor: CHAUHAN, Manish, Cheltenham Gloucestershire GL52 8JB (GB)
(74) Representative: Latham, Stuart Alexander
(86) International application number: PCT/GB2022/051034
(87) International publication number: WO 2022/238675

(56) References cited:
- DE-C1- 19 806 501
- US-A1- 2005 230 195
- US-A1- 2014 352 289

## Description

### Background of the invention

Telescopic actuators are commonly used in airspace or other mechanical applications and generally comprise a cylinder or a body defining a cylindrical cavity and a piston or rod, which is slidably mounted to the body. There is often a need for telescopic actuators to be selectively lockable, i.e. to be configured such that in a first, locked, state the piston is prevented from moving relative to the body, while in a second, unlocked, state the piston is allowed to move relative to the body. It is generally desired to ensure that a lockable actuator will not prematurely transition from the locked state to the unlocked state or vice versa.

In known lockable actuators, to ensure that there will be no premature transition between the locked and the unlocked state, the systems often rely on a resistive force, i.e. a frictional force, that needs to be overcome for locking and unlocking by spring and/or hydraulic systems. This can cause excessive wear of parts and may lead to higher maintenance requirements, impacting cost, reliability and potentially safety.

There is thus a need for an improved lockable actuator that can reliably prevent an unwanted transition from a locked state to an unlocked state.

Published US patent application US2005230195A1 describes a strut assembly comprising a locking device in operative communication with a piston, wherein the locking device comprises an active material operative to resist motion of the piston in response to an activation signal.

Published US patent application US2014352289A1 relate to, fluid operated actuators, and more particularly, to a fluid operated actuator with improved position adjustment and position locking.

### Summary of the Invention

Aspects of the invention are provided in accordance with the appended independent claims 1, 3 and 4. Preferred embodiments of the invention are provided in the dependent claims.

### Brief Description of the Drawings

Embodiments of the invention will now be described, by way of non-limiting examples only, with reference to the following accompanying figures, in which:
Figure 1a is a schematic cross sectional diagram of an internally locking telescopic actuator with shape memory alloy in an unlocked state.
Figure 1b is a schematic cross sectional diagram of an internally locking telescopic actuator with shape memory alloy in a locked state.
Figure 2a is a partial perspective schematic diagram of an externally locking telescopic actuator in an unlocked state.
Figure 2b is a partial perspective schematic diagram of an externally locking telescopic actuator in a locked state.
Figure 3a is a cross sectional diagram of an externally locking telescopic actuator with shape memory alloy in an unlocked state.
Figure 3b is a cross sectional diagram of an externally locking telescopic actuator with shape memory alloy in a locked state.

### Detailed Description of Embodiments of the Invention

The present invention relates to a lockable telescopic actuator, comprising a cylinder or a body defining a cylindrical cavity and a piston or a rod, the piston or rod mounted to slide telescopically in the cylindrical cavity, the lockable telescopic actuator further comprising a locking mechanism arranged to be in a locked state or in an unlocked state. When the lockable telescopic actuator is in a locked state the piston is prevented from moving relative to the body. When the lockable telescopic actuator is in the unlocked state the piston is allowed to move relative to the body. A lockable telescopic actuator according to the invention can be incorporated in an landing gear for an aircraft, or in other components of an aircraft.

Shape Memory Alloys, SMAs, are a type of materials with the ability to return to a predefined shape after experiencing plastic deformation. SMAs revert back to their predefined shape by heating, cooling, or some other external stimulus as long as the experienced deformation is within a recoverable range. The process of deformation and shape recovery can be repeated many times.

SMAs undergo temperature driven phase transformation. Temperature change may be achieved by applying a current to the SMA, which due to the resistivity of the SMA can result in heating of the SMA. In some embodiments of the invention, the SMA is nickel-titanium allot or Nitinol that has an appropriate resistivity for such applications. As the SMA changes temperature due to heating or cooling the crystal structure of the SMA changes which results in dimensional changes that can range between 1% and 8%. This can result in the SMA element extending or compressing depending on its temperature.

The SMA biasing elements discussed below may be electrically coupled to a current source (not shown in the following figures) to receive current. When current flows through any of the SMA biasing elements mentioned below, due to the resistivity of the SMA, the SMA may be heated to a first predefined temperature, at which point the SMA may have a first size or length. When current does not flow through the SMA, the SMA cools, at which point the SMA may have a second size or length. As such each SMA discussed later can be extended or compressed selectively, by heating or cooling the SMA.

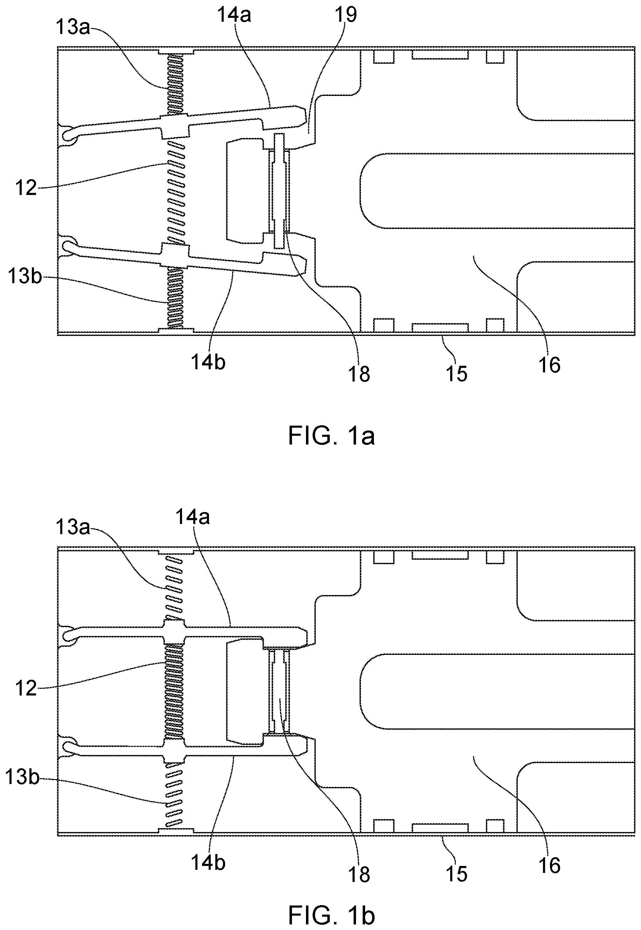

Figure 1a schematically illustrates a cross sectional view of a telescopic actuator according to an embodiment of the invention, illustrated in the unlocked state. Figure 1b illustrates the same actuator of Figure 1a in the locked state.

The telescopic actuator 10 comprises a piston 16 mounted to slide telescopically in the cylindrical cavity of the body 15, commonly known as a sliding piston. The piston 16 may comprise dynamic seals 17 on a surface to reduce the possibility of leaking of gas or fluids contained in the telescopic actuator.

The telescopic actuator 10 comprises a locking mechanism. The locking mechanism comprises a first locking segment 14a, a second locking segment 14b, and a first shape memory alloy, SMA, biasing element 12. In the embodiment described in Figures 1a and 1b, the first locking segment 14a and the second locking segment 14b are shaped as rocking claws that may form jaws, although in other embodiments they may have different shapes as will be shown later in the present description. The first locking segment 14a and the second locking segment 14b are respectively attached on one side through hinges in the cylindrical cavity of the body 15 and arranged to pivot about each respective hinge.

The piston 16 comprises on its surface at least one recess or slot 19. In the embodiment illustrated in Figures 1a and 1b the first locking segment 14a and the second locking segment 14b are arranged to pivot about their respective hinges such that they can at least partially enter the recess 19 or be entirely out of the recess 19. In a first state when the first locking segment 14a and/or the second locking segment 14b are at least partially inserted in the recess 19 the piston is prevented from moving relative to the body. In this first state the first locking segment 14a and/or the second locking segment 14b are in a locked position and the lockable telescopic actuator is in a locked state. In a second state when the first locking segment 14a and the second locking segment 14b are entirely out of the recess 19 the piston is allowed to move relative to the body. In the second state the first locking segment 14a and/or the second locking segment 14b are in an unlocked position and the lockable telescopic actuator is in an unlocked state.

The telescopic actuator illustrated in Figures 1a and 1b also comprises a first SMA biasing element configured to be selectively extended or compressed. The first SMA is positioned between the first locking element 14a and the second locking element 14b.

When the first SMA is selectively compressed the first locking element 14a and the second locking element 14b are biased such that they are in the locked position. In other words when the first SMA is selectively compressed first SMA applies to the first locking element 14a and the second locking element 14b a force such that the first locking element 14a and the second locking element 14b pivot about their respective hinges towards the recess until the first locking element 14a and the second locking element 14b are at least partially inserted in the recess 19 and the telescopic actuator is, as shown in Figure 1b.

When the first SMA biasing element 12 is selectively extended the first locking element 14a and the second locking element 14b are biased such that they are in the unlocked position. In other words, when the first SMA is selectively extended, first SMA applies to the first locking element 14a and the second locking element 14b a force such that the first locking element 14a and the second locking element 14b pivot about their respective hinges away from the recess, until the first locking element 14a and the second locking element 14b are out of the recess 19 and the telescopic actuator is as shown in Figure 1a.

The telescopic actuator illustrated in Figures 1a and 1b may also comprise a second SMA biasing element 13a and a third SMA biasing element 13b configured to be selectively extended or compressed. The second SMA biasing element 13a is located in the cylindrical cavity and positioned between the first locking element 14a and the body. The third SMA biasing element 13b is located in the cylindrical cavity and positioned between the second locking element 14b and the body.

When the first SMA biasing element 12 is selectively extended the second SMA biasing element 13a is selectively compressed. Thus, when the first SMA biasing element 12 applies a force to the first locking segment 14a to move the first locking segment 14a to the unlocked position, the second SMA biasing element 13a also applies a force to the first locking segment 14a to move the first locking segment 14a to the unlocked position. Similarly, when the first SMA biasing element 12 is selectively compressed the second SMA biasing element 13a is selectively extended. Thus, when the first SMA biasing element 12 applies a force to the first locking segment 14a to move the first locking segment 14a to the locked position, the second SMA biasing element 13a also applies a force to the first locking segment 14a to move the first locking segment 14a to the locked position. Advantageously, relying on two SMA biasing springs to move the first locking segment allows higher locking loads to be achieved and improved reliability.

Similarly, when the first SMA biasing element 12 is selectively extended the third SMA biasing element 13b is selectively compressed. Thus, when the first SMA biasing element 12 applies a force to the second locking segment 14b to move the second locking segment 14b to the unlocked position, the third SMA biasing element 13b also applies a force to the second locking segment 14b to move the second locking segment 14b to the unlocked position. Similarly, when the first SMA biasing element 12 is selectively compressed the third SMA biasing element 13b is selectively extended. Thus, when the first SMA biasing element 12 applies a force to the second locking segment 14b to move the second locking segment 14b to the locked position, the third SMA biasing element 13b also applies a force to the second locking segment 14b to move the second locking segment 14b to the locked position. As in the case of the first SMA biasing element 12 and the second biasing element 13a, relying on two SMA biasing springs to move the second locking segment 14b allows higher locking loads to be achieved and improved reliability.

Although the embodiment illustrated in Figures 1a and 1b comprises the first, second and third SMA biasing elements 12, 13a and 13b, other embodiments may comprise only the first SMA biasing element 12. Yet, even other embodiments may lack the first SMA biasing element 12 but have the second and/or the third SMA biasing elements 13a and 13b. Furthermore, other examples not covered by the present invention, may have only the first locking segment 14a and lack a further locking element, in which case the first SMA biasing element 12 may be between the first locking segment 14a and the body 15.

In some embodiments of the invention, the telescopic actuator may comprise multiple locking mechanisms, each comprising respective rocking claws disposed radially with respect to the longitudinal axis of the piston.

In operation, the telescopic actuator may initially be in an unlocked state as described above when a controller (not shown) enables a current source (not shown) to provide a first current to the first SMA biasing element 12 such that the first SMA biasing element 12 is maintained at a predefined first temperature, while providing a second current to the second and third SMA biasing elements 13a, 13b such that the second and third SMA biasing elements 13a, 13b are maintained at a predefined second temperature. At the predefined first temperature the first SMA biasing element 12 is extended and at the predefined second temperature the second and third SMA biasing elements 13a, 13b are compressed, thus biasing the first and second locking segments 14a, 14b in the unlocking position and allowing the piston 26 to move relative to the body 25.

When there is a need to lock the telescopic actuator the controller enables the current source to provide a predefined third current to the first SMA biasing element 12, wherein the third current is less than the first current, such that the first SMA biasing element 12 is cooled to a predefined third temperature, while providing a fourth current to the second and third SMA biasing elements 13a, 13b, wherein the fourth current is greater than the second current such that the second and third SMA biasing elements 13a, 13b are heated to a predefined fourth temperature. The cooling of the first SMA biasing element 12 causes the first SMA biasing element 12 to compress, while the heating of the second and third SMA biasing elements 13a, 13b cause the second and third SMA biasing elements 13a, 13b to extend, biasing the first and second locking segments 14a, 14b in the locking position and preventing the piston 26 to move relative to the body 25.

When there is a need to unlock the telescopic actuator, the controller enables the current source to provide to the first SMA biasing element 12 the first current, thus extending the first SMA biasing element 12, and to provide the second and third SMA biasing elements 13a, 13b the second current, thus compressing the second and third SMA biasing elements 13a, 13b. Extending the first SMA biasing element 12 and compressing the second and third SMA biasing elements 13a, 13b biases the first and second locking segments 14a, 14b back to the unlocked position, allowing the piston 26 to move relative to the body 25.

The piston 16 illustrated in Figures 1a and 1b may comprise an indicator switch 18 in the recess 19. The indicator switch 18 is configured to be activated when in contact with the first and/or second locking segments 14a, 14b and deactivated when the first and second locking segments are out of the recess 19. In other embodiments, the indicator switch 18 may be configured to be deactivated when in contact with the first and/or second locking segments 14a, 14b and activated when the first and second locking segments are out of the recess 19. The indicator switch 18 may be part of a feedback mechanism (not shown) that comprises the current source, thus providing a single centralised system that verifies that the heating or cooling of the SMA has reached the desired levels based on the output of the indicator switch 18 that provides feedback of whether the telescopic actuator is in the locked state or in the unlocked state.

Advantageously, as each of the SMA biasing elements can separately bias the locking segments between the locked and the unlocked position, the actuator benefits from improved redundancy and reliability. In other words, even if the first SMA biasing element 12 fails, the second and third SMA biasing element 13a and 13b will still be able to move the first and second locking segments 14a, 14b to engage or disengage with the piston 16, and vice versa.

Although in the telescopic actuator illustrated in Figures 1a and 1b the cooling of the first SMA biasing element 12 causes the first SMA biasing element 12 to compress, while the heating of the second and third SMA biasing elements 13a, 13b causes the second and third SMA biasing elements 13a, 13b to extend, in other embodiments the SMA biasing elements may arranged such that the heating of the first SMA biasing element 12 would cause the first SMA biasing element 12 to compress, while the cooling of the second and third SMA biasing elements 13a, 13b would cause the second and third SMA biasing elements 13a, 13b to extend, or in other words the opposite behaviour to the telescopic actuator illustrated in Figures 1a and 1b. Yet, in other embodiments, the first SMA biasing element 12 and the second and third SMA biasing elements 13a, 13b may comprise different SMA, such that the cooling of all of the first SMA biasing element 12 and the second and third SMA biasing elements 13a, 13b causes the first SMA biasing element 12 to compress and the third SMA biasing elements 13a, 13b to extend, or alternatively, the heating of all of the first SMA biasing element 12 and the second and third SMA biasing elements 13a, 13b causes the first SMA biasing element 12 to compress and the third SMA biasing elements 13a, 13b to extend. The skilled person will readily understand that based on the arrangement of the SMA biasing elements different combination of SMAs can be employed to bias the telescopic actuator to the locked or unlocked position for a variety of temperatures.

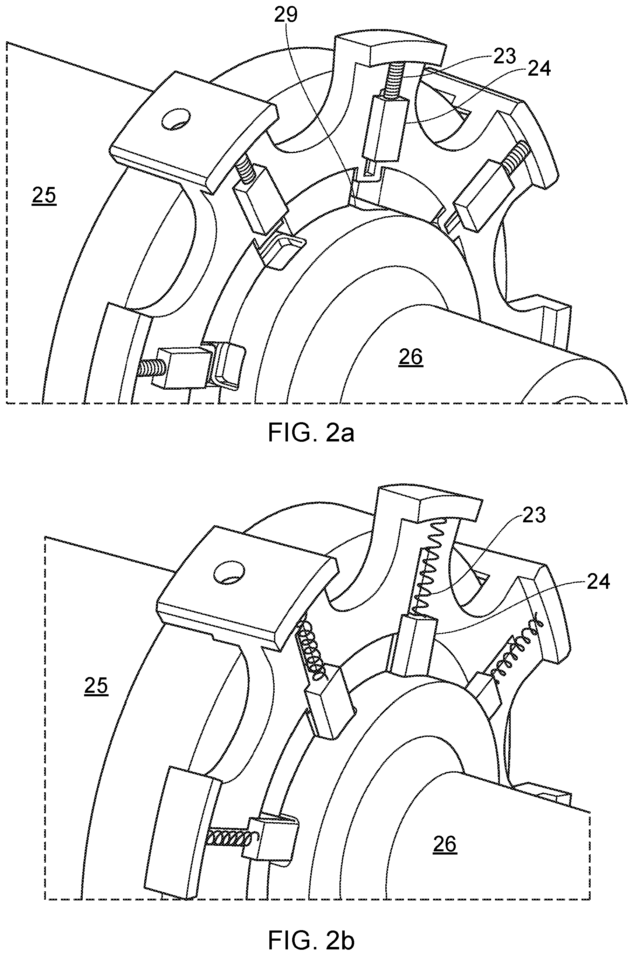

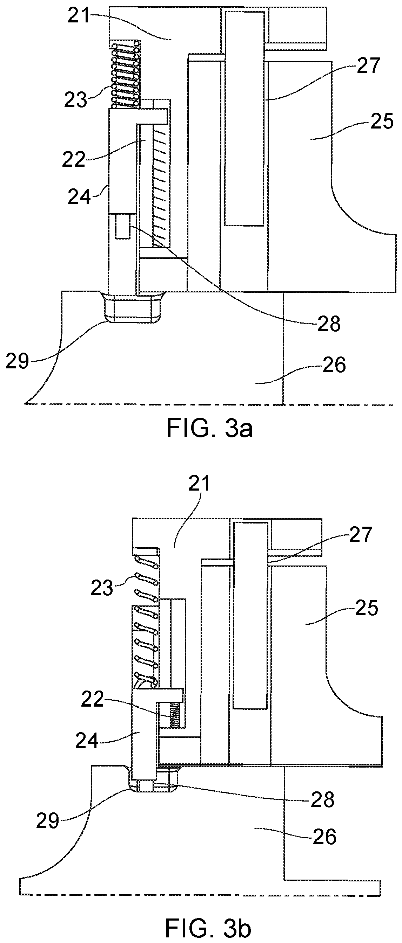

Figures 2a and 2b are perspective schematic diagrams of a telescopic actuator 20 according to another embodiment of the invention, wherein the locking mechanism of the lockable telescoping actuator in not located in the cylindrical cavity but is mounted externally on the body. Figures 3a and 3b are cross-sectional representations of the embodiment presented in figures 2a and 2b accordingly. Figures 2a and 3a illustrate the externally locking telescoping actuator in the unlocked state, while figures 2b and 3b illustrate the externally locking telescoping actuator in the locked state.

The telescopic actuator 20 comprises a piston 26 mounted to slide telescopically in the cylindrical cavity of the body 25, commonly known as a sliding piston. The piston 26 may comprise dynamic seals 27 (not shown) to reduce the possibility of leaking of gas or fluids contained in the telescopic actuator.

The telescopic actuator 20 comprises a locking mechanism mounted on a housing 21. The housing 21 is attached on the external surface of the body 25 with a pin 27, although in other embodiments the housing 21 may be attached on the body in other manners. In the embodiment illustrated in Figures 2a-3b, the housing 21 surrounds the body 25, although in other embodiments the housing 21 may be in contact with only a small part of the external surface of the body 25. The locking mechanism comprises a first locking segment 24, a first SMA biasing element 22 and a second SMA biasing element 23.

As can be seen in Figures 2a and 2b the telescopic actuator may have multiple locking mechanisms mounted on the housing 21 radially with respect to the longitudinal axis of the piston 26, such that they surround the piston 26, with each locking mechanism comprising a respective first locking segment, a first SMA biasing element and a second SMA biasing element.

The first locking segment 24 is slidably engaged to the housing 21 through the first SMA biasing element 22 and the second SMA biasing element 23. The first SMA biasing element 22 is arranged between the housing 21 and the first locking segment 24 such that when the first SMA biasing element 22 is selectively extended the first locking element 24 is moved away from the piston 26 while when the first SMA biasing element 22 is selectively compressed the first locking element 24 is moved towards the piston 26. The second SMA biasing element 23 is arranged between the housing 21 and the first locking segment 24 such that when the second SMA biasing element 23 is selectively compressed the first locking element 24 is moved away from the piston 26 while when the second SMA biasing element 23 is selectively extended the first locking element 24 is moved towards the piston 26.

The piston 26 comprises on its surface at least one recess or slot 29. In the embodiment illustrated in Figures 2a-3b the first locking segment 24 is arranged such that it can move from being at least partially inserted in the recess 29 to be entirely out of the recess 29. In a first state, when the first locking segment 24 is at least partially inserted in the recess 29 the piston is prevented from moving relative to the body 25 . In this first state, the first locking segment 24 is in a locked position and the lockable telescopic actuator is in a locked state. In a second state, when the first locking segment 24 is entirely out of the recess 29, the piston 26 is allowed to move relative to the body 25. In the second state the first locking segment 24 is in an unlocked position and the lockable telescopic actuator is in an unlocked state.

In the embodiment described in Figures 2a-3b, the first locking segment 24 is shaped as a cuboid, although in other embodiments the first locking segment 24 may be shaped as a pin or have other appropriate shapes such that it conforms to the shape of the recess 29.

In operation, the telescopic actuator may initially be in the unlocked state as described above when a controller (not shown) enables a current source (not shown) to provide a first current to the first SMA biasing element 22 such that the first SMA biasing element 22 is maintained at a respective predefined first temperature, while providing a second current to the second SMA biasing elements 23 such that the second SMA biasing elements 23 is maintained at a respective predefined second temperature. At the predefined first temperature the first SMA biasing element 22 is extended and at the predefined second temperature the second biasing elements 23 is compressed, thus biasing the first locking segment 24 in the unlocking position and allowing the piston 26 to move relative to the body 25.

When there is a need to lock the telescopic actuator, the controller enables the current source to provide a respective predefined third current to the first SMA biasing element 22, wherein the respective third current is less than the respective first current, such that the first SMA biasing element 22 is cooled at a respective predefined third temperature, while providing a respective predefined fourth current to the second SMA biasing element 23, wherein the respective fourth current is greater than the respective second current such that the second SMA biasing elements 23 is heated at a respective predefined fourth temperature. The cooling of the first SMA biasing element 22 causes the first SMA biasing element 22 to compress, while the heating of the second SMA biasing elements 23 causes the second SMA biasing element 23 to extend, biasing the first locking segments 24 in the locking position and preventing the piston 26 to move relative to the body 25.

When there is a need to unlock the telescopic actuator, the controller enables the current source to provide the respective predefined first current to the first SMA biasing element 22, thus extending the first SMA biasing element 22, and to provide the respective predefined second current to the second SMA biasing elements 23, thus compressing the second SMA biasing element 23. Extending the first SMA biasing element 22 and compressing the second SMA biasing element 23 biases the first locking segment 24 back to the unlocked position, allowing the piston 26 to move relative to the body 25.

Advantageously as the first SMA biasing element 22 and the second biasing element 23 separately can bias the first locking segment 24 between the locked and the unlocked position, the actuator benefits from improved redundancy and reliability. In other words, even if the first biasing element 22 fails, the second biasing element 23 will still be able to move the first locking segments 24 to engage or disengage with the piston 26, and vice versa.

The first locking segment 24 may comprise an indication switch 28 on a surface facing the recess 29. The indication switch 28 is configured to be activated when the first locking segment enters the recess 29 and deactivated when the first locking segment is out of the recess 29 or vice versa. The indication switch 28 may be part of a feedback mechanism (not shown) that comprises the current source, thus providing a single centralised system that verifies that the heating or cooling of the SMA has reached the desired levels based on the output of the indication switch 28 that provides feedback of whether the telescopic actuator is in the locked state or in the unlocked state.

Although in the embodiment described above the current source changes the amplitude of the current supplied to the SMA biasing elements, in other embodiments, the current source may be configured to provide current pulses of fixed amplitude, and the cooling or heating of the SMA biasing elements may be adjusted by the current source changing the frequency of the current sources.

Advantageously in the above locking mechanisms, locking and unlocking the actuator is controlled by electrical means thus requiring fewer moving parts than known purely mechanical locking mechanisms, and thus enjoy improved reliability, reduced weight, and easier maintenance when compared with known lockable telescopic actuators, which are all significant advantages in aerospace applications.

Furthermore, in embodiments of the invention comprising multiple SMA biasing elements, for example as illustrated in the figures, actuation of the locking segments can be based solely on any one of the SMA biasing elements. The system thus benefits from redundancy and improved reliability.

Although the invention has been described above with reference to one or more preferred embodiments, it will be appreciated that various changes or modifications may be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that within the scope of the appended claims a combination of these measures cannot be used to advantage.

## Claims

1. A lockable telescopic actuator (10) arranged to be in a locked state or in an unlocked state, the lockable telescopic actuator comprising:
a body (15) defining a cylindrical cavity;
a piston (16) mounted to slide telescopically in the cylindrical cavity; and
a locking mechanism comprising:
a first locking segment (14a), the first locking segment arranged to be movable between a locked position and an unlocked position, wherein:
in the locked position the first locking segment (14a) is engaged with the piston (16) to prevent the piston (16) from moving relative to the body (15) and
in the unlocked position the first locking segment (14a) is disengaged from the piston (16) to allow the piston (16) to move relative to the body (15); and
a first shape memory alloy, SMA, biasing element (12) configured to be selectively extended or compressed, the first SMA biasing element (12) arranged such that when the first SMA biasing element (12) is selectively compressed, the first locking segment (14a) is biased into the locked position and when the first SMA biasing element (12) is selectively extended, the first locking element (14a) is biased into the unlocked position, **characterised in that**:
the locking mechanism is located in the cylindrical cavity and further comprises:
a second locking segment (14b), separate from the first locking segment (14a), the second locking segment (14b) arranged to be movable between a locked position and an unlocked position, wherein:
in the locked position the second locking segment (14b) is engaged with the piston (16) to prevent the piston (16) from moving relative to the body (15) and
in the unlocked position the second locking segment (14b) is disengaged from the piston (16) to allow the piston (16) to move relative to the body (15); and wherein
the first SMA biasing element (12) is located between the first and second locking segments (14a, 14b) and arranged such that when the first SMA biasing element (12) is selectively compressed, the second locking element (14b) is biased into the locked position and when the first SMA bias element (12) is selectively extended, the second locking element (14b) is biased into the unlocked position.

2. A lockable telescopic actuator according to claim 1, wherein the locking mechanism comprises a second SMA biasing element (13a) arranged between the body and the first locking segment (14a) and a third SMA biasing element (13b) arranged between the body and the second locking segment (14b), the second and third SMA biasing elements (13a, 13b) configured to be selectively extended or compressed and arranged to:
compress when the first SMA biasing element (12) extends; and
extend when the first SMA biasing element (12) compresses.

3. A lockable telescopic actuator (20) arranged to be in a locked state or in an unlocked state, the lockable telescopic actuator comprising:
a body (25) defining a cylindrical cavity;
a piston (26) mounted to slide telescopically in the cylindrical cavity; and
a locking mechanism comprising:
a first locking segment (24), the first locking segment arranged to be movable between a locked position and an unlocked position, wherein:
in the locked position the first locking segment (24) is engaged with the piston (26) to prevent the piston (26) from moving relative to the body (25), and
in the unlocked position the first locking segment (24) is disengaged from the piston (26) to allow the piston (26) to move relative to the body (25);
a first shape memory alloy, SMA, biasing element (22) configured to be selectively extended or compressed, the first SMA biasing element (22) arranged such that when the first SMA biasing element (22) is selectively compressed, the first locking segment (24) is biased into the locked position and when the first SMA biasing element (22) is selectively extended, the first locking element (24) is biased into the unlocked position, **characterised in that**:
the locking mechanism is mounted on a housing (21) attached on an external surface of the body (25), the first SMA biasing element (22) being located between the housing (21) and the first locking segment (24), wherein the first locking segment (24) is slidably engaged with the housing (21) and wherein the locking mechanism comprises a second SMA biasing element (23) located between the housing (21) and the first locking segment (24), the second SMA biasing element (23) configured to be selectively extended or compressed, the second SMA biasing element (23) arranged:
to compress when the first SMA biasing element (22) extends; and
to extend when the first SMA biasing element (22) compresses.

4. A lockable telescopic actuator (10) arranged to be in a locked state or in an unlocked state, the lockable telescopic actuator (10, 20) comprising:
a body (15) defining a cylindrical cavity;
a piston (16) mounted to slide telescopically in the cylindrical cavity; and
a locking mechanism comprising:
a first locking segment (14a), the first locking segment (14a) arranged to be movable between a locked position and an unlocked position, wherein:
in the locked position the first locking segment (14a) is engaged with the piston (16) to prevent the piston (16) from moving relative to the body (15) and
in the unlocked position the first locking segment (14a) is disengaged from the piston (16) to allow the piston (16) to move relative to the body (15); and
a first shape memory alloy, SMA, biasing element (13a) configured to be selectively extended or compressed, the first SMA biasing element (13a) arranged such that when the first SMA biasing element (13a) is selectively extended, the first locking segment (14a) is biased into the locked position and when the first SMA biasing element (13a) is selectively compressed, the first locking element (14a) is biased into the unlocked position, **characterised in that**:
the locking mechanism is located in the cylindrical cavity and further comprises:
a second locking segment (14b), separate from the first locking segment (14a), the second locking segment arranged to be movable between a locked position and an unlocked position, wherein:
in the locked position the second locking segment (14b) is engaged with the piston (16) to prevent the piston (16) from moving relative to the body (15) and
in the unlocked position the second locking segment (14b) is disengaged from the piston (16) to allow the piston (16) to move relative to the body (15); and
a second SMA biasing element (13b) configured to be selectively extended or compressed, the second SMA biasing element (13b) arranged such that when the first SMA biasing element (13a) is selectively extended, the second SMA biasing element (13b) is selectively extended and the second locking element (14b) is biased into the locked position and when the first SMA biasing element (13a) is selectively compressed, the second SMA biasing element (13b) is selectively compressed and the second locking element (14b) is biased into the unlocked position,
wherein the first SMA biasing element (13a) is between the body and the first locking segment (14a) and the second SMA biasing element (13b) is between the body and the second locking segment (14b).

5. A lockable telescopic actuator according to any of the preceding claims wherein the piston (16, 26) includes a recess (19, 29) formed therein and wherein
in the locked position the first locking segment (14a, 24) is at least partially inserted in the recess (19, 29); and
in the unlocked position the first locking segment (14a, 24) is out of the recess (19, 29).

6. A lockable telescopic actuator according to any of the preceding claims wherein the piston (16, 26) and/or the first locking segment (14a, 24) comprises an indication switch (28) that is:
activated when the first locking segment (14a, 24) is engaged with the piston (16, 26); and
deactivated when the first locking segment (14a, 24) is engaged with the piston (16, 26);

7. A lockable telescopic actuator according to any of the preceding claims wherein the first SMA biasing element is arranged to extend when at a first predefined temperature and to compress when at a second predefined temperature.

8. A lockable telescopic actuator according to any of the preceding claims wherein the first SMA biasing element (12, 22) is electrically coupled to a current source.

9. A landing gear for an aircraft, comprising a lockable telescopic actuator (10, 20) according to any of the preceding claims.

10. An aircraft comprising a lockable telescopic actuator according to any of claims 1-8 and/or a landing gear according to claim 9.

## Patentansprüche

1. Verriegelbarer Teleskop-Stellantrieb (10), der so angeordnet ist, dass er sich in einem verriegelten Zustand oder in einem entriegelten Zustand befinden kann, wobei der verriegelbare Teleskop-Stellantrieb umfasst:
einen Körper (15), der einen zylindrischen Hohlraum definiert;
einen Kolben (16), der so montiert ist, dass er teleskopisch in den zylindrischen Hohlraum gleitet; und
einen Verriegelungsmechanismus, umfassend:
ein erstes Verriegelungssegment (14a), wobei das erste Verriegelungssegment so angeordnet ist, dass es zwischen einer verriegelten Position und einer entriegelten Position bewegt werden kann, wobei:
in der verriegelten Position das erste Verriegelungssegment (14a) mit dem Kolben (16) in Eingriff steht, um zu verhindern, dass sich der Kolben (16) relativ zu dem Körper (15) bewegt, und
in der entriegelten Position das erste Verriegelungssegment (14a) von dem Kolben (16) gelöst ist, um dem Kolben (16) zu ermöglichen, sich relativ zu dem Körper (15) zu bewegen; und
ein erstes Vorspannelement (12) aus einer Formgedächtnislegierung, SMA, das so ausgebildet ist, dass es selektiv ausgedehnt oder komprimiert werden kann, wobei das erste SMA-Vorspannelement (12) so angeordnet ist, dass, wenn das erste SMA-Vorspannelement (12) selektiv komprimiert wird, das erste Verriegelungssegment (14a) in die verriegelte Position vorgespannt wird und, wenn das erste SMA-Vorspannelement (12) selektiv ausgedehnt wird, das erste Verriegelungselement (14a) in die entriegelte Position vorgespannt wird, **dadurch gekennzeichnet, dass**:
der Verriegelungsmechanismus sich in dem zylindrischen Hohlraum befindet und weiter umfasst:
ein zweites Verriegelungssegment (14b), das von dem ersten Verriegelungssegment (14a) getrennt ist, wobei das zweite Verriegelungssegment (14b) so angeordnet ist, dass es zwischen einer verriegelten Position und einer entriegelten Position bewegt werden kann, wobei:
in der verriegelten Position das zweite Verriegelungssegment (14b) mit dem Kolben (16) in Eingriff steht, um zu verhindern, dass sich der Kolben (16) relativ zu dem Körper (15) bewegt, und
in der entriegelten Position das zweite Verriegelungssegment (14b) von dem Kolben (16) gelöst ist, um dem Kolben (16) zu ermöglichen, sich relativ zu dem Körper (15) zu bewegen; und wobei
das erste SMA-Vorspannelement (12) sich zwischen dem ersten und dem zweiten Verriegelungssegment (14a, 14b) befindet, sodass, wenn das erste SMA-Vorspannelement (12) selektiv komprimiert wird, das zweite Verriegelungselement (14b) in die verriegelte Position vorgespannt wird und, wenn das erste SMA-Vorspannelement (12) selektiv ausgedehnt wird, das zweite Verriegelungselement (14b) in die entriegelte Position vorgespannt wird.

2. Verriegelbarer Teleskop-Stellantrieb nach Anspruch 1, wobei der Verriegelungsmechanismus ein zweites SMA-Vorspannelement (13a), das zwischen dem Körper und dem ersten Verriegelungssegment (14a) angeordnet ist, und ein drittes SMA-Vorspannelement (13b) umfasst, das zwischen dem Körper und dem zweiten Verriegelungssegment (14b) angeordnet ist, wobei das zweite und das dritte SMA-Vorspannelement (13a, 13b) so ausgebildet sind, dass sie selektiv ausgedehnt oder komprimiert werden können, und so angeordnet sind, dass:
sie sich komprimieren, wenn sich das erste SMA-Vorspannelement (12) ausdehnt; und
sie sich ausdehnen, wenn das erste SMA-Vorspannelement (12) komprimiert wird.

3. Verriegelbarer Teleskop-Stellantrieb (20), der so angeordnet ist, dass er sich in einem verriegelten Zustand oder in einem entriegelten Zustand befinden kann, wobei der verriegelbare Teleskop-Stellantrieb umfasst:
einen Körper (25), der einen zylindrischen Hohlraum definiert;
einen Kolben (26), der so montiert ist, dass er teleskopisch in den zylindrischen Hohlraum gleitet; und
einen Verriegelungsmechanismus, umfassend:
ein erstes Verriegelungssegment (24), wobei das erste Verriegelungssegment so angeordnet ist, dass es zwischen einer verriegelten Position und einer entriegelten Position bewegt werden kann, wobei:
in der verriegelten Position das erste Verriegelungssegment (24) mit dem Kolben (26) in Eingriff steht, um zu verhindern, dass sich der Kolben (26) relativ zu dem Körper (25) bewegt, und
in der entriegelten Position das erste Verriegelungssegment (24) von dem Kolben (26) gelöst ist, um dem Kolben (26) zu ermöglichen, sich relativ zu dem Körper (25) zu bewegen;
ein erstes Vorspannelement (22) aus einer Formgedächtnislegierung, SMA, das so ausgebildet ist, dass es selektiv ausgedehnt oder komprimiert werden kann, wobei das erste SMA-Vorspannelement (22) so angeordnet ist, dass,
wenn das erste SMA-Vorspannelement (22) selektiv komprimiert wird, das erste Verriegelungssegment (24) in die verriegelte Position vorgespannt wird und, wenn das erste SMA-Vorspannelement (22) selektiv ausgedehnt wird, das erste Verriegelungselement (24) in die entriegelte Position vorgespannt wird, **dadurch gekennzeichnet, dass**:
der Verriegelungsmechanismus an einem Gehäuse (21) montiert ist, das an einer Außenfläche des Körpers (25) befestigt ist, wobei sich das erste SMA-Vorspannelement (22) zwischen dem Gehäuse (21) und dem ersten Verriegelungssegment (24) befindet, wobei das erste Verriegelungssegment (24) gleitend mit dem Gehäuse (21) in Eingriff steht, und wobei der Verriegelungsmechanismus ein zweites SMA-Vorspannelement (23) umfasst, das sich zwischen dem Gehäuse (21) und dem ersten Verriegelungssegment (24) befindet, wobei das zweite SMA-Vorspannelement (23) so ausgebildet ist, dass es selektiv ausgedehnt oder komprimiert werden kann, wobei das zweite SMA-Vorspannelement (23) so angeordnet ist, dass:
es sich komprimiert, wenn sich das erste SMA-Vorspannelement (22) ausdehnt; und
es sich ausdehnt, wenn das erste SMA-Vorspannelement (22) komprimiert wird.

4. Verriegelbarer Teleskop-Stellantrieb (10), der so angeordnet ist, dass er sich in einem verriegelten Zustand oder in einem entriegelten Zustand befinden kann, wobei der verriegelbare Teleskop-Stellantrieb (10, 20) umfasst:
einen Körper (15), der einen zylindrischen Hohlraum definiert;
einen Kolben (16), der so montiert ist, dass er teleskopisch in den zylindrischen Hohlraum gleitet; und
einen Verriegelungsmechanismus, umfassend:
ein erstes Verriegelungssegment (14a), wobei das erste Verriegelungssegment (14a) so angeordnet ist, dass es zwischen einer verriegelten Position und einer entriegelten Position bewegt werden kann, wobei:
in der verriegelten Position das erste Verriegelungssegment (14a) mit dem Kolben (16) in Eingriff steht, um zu verhindern, dass sich der Kolben (16) relativ zu dem Körper (15) bewegt, und
in der entriegelten Position das erste Verriegelungssegment (14a) von dem Kolben (16) gelöst ist, um dem Kolben (16) zu ermöglichen, sich relativ zu dem Körper (15) zu bewegen; und
ein erstes Vorspannelement (13a) aus einer Formgedächtnislegierung, SMA, das so ausgebildet ist, dass es selektiv ausgedehnt oder komprimiert werden kann, wobei das erste SMA-Vorspannelement (13a) so angeordnet ist, dass, wenn das erste SMA-Vorspannelement (13a) selektiv komprimiert wird, das erste Verriegelungssegment (14a) in die verriegelte Position vorgespannt wird und, wenn das erste SMA-Vorspannelement (13a) selektiv komprimiert wird, das erste Verriegelungselement (14a) in die entriegelte Position vorgespannt wird, **dadurch gekennzeichnet, dass**:
der Verriegelungsmechanismus sich in dem zylindrischen Hohlraum befindet und weiter umfasst:
ein zweites Verriegelungssegment (14b), das von dem ersten Verriegelungssegment (14a) getrennt ist, wobei das zweite Verriegelungssegment so angeordnet ist, dass es zwischen einer verriegelten Position und einer entriegelten Position bewegt werden kann, wobei:
in der verriegelten Position das zweite Verriegelungssegment (14b) mit dem Kolben (16) in Eingriff steht, um zu verhindern, dass sich der Kolben (16) relativ zu dem Körper (15) bewegt, und
in der entriegelten Position das zweite Verriegelungssegment (14b) von dem Kolben (16) gelöst ist, um dem Kolben (16) zu ermöglichen, sich relativ zu dem Körper (15) zu bewegen; und
ein zweites SMA-Vorspannelement (13b), das so ausgebildet ist, dass es selektiv ausgedehnt oder komprimiert werden kann, wobei das zweite SMA-Vorspannelement (13b) so angeordnet ist, dass, wenn das erste SMA-Vorspannelement (13a) selektiv ausgedehnt wird, das zweite SMA-Vorspannelement (13b) selektiv ausgedehnt wird und das zweite Verriegelungselement (14b) in die verriegelte Position vorgespannt wird und, wenn das erste SMA-Vorspannelement (13a) selektiv komprimiert wird, das zweite SMA-Vorspannelement (13b) selektiv komprimiert wird und das zweite Verriegelungselement (14b) in die entriegelte Position vorgespannt wird,
wobei das erste SMA-Vorspannelement (13a) zwischen dem Körper und dem ersten Verriegelungssegment (14a) liegt und das zweite SMA-Vorspannelement (13b) zwischen dem Körper und dem zweiten Verriegelungssegment (14b) liegt.

5. Verriegelbarer Teleskop-Stellantrieb nach einem der vorstehenden Ansprüche, wobei der Kolben (16, 26) eine darin ausgebildete Vertiefung (19, 29) einschließt und wobei
in der verriegelten Position das erste Verriegelungssegment (14a, 24) mindestens teilweise in die Vertiefung (19, 29) eingesetzt ist; und
in der entriegelten Position sich das erste Verriegelungssegment (14a, 24) nicht in der Vertiefung (19, 29) befindet.

6. Verriegelbarer Teleskop-Stellantrieb nach einem der vorstehenden Ansprüche, wobei der Kolben (16, 26) und/oder das erste Verriegelungssegment (14a, 24) einen Kontrollschalter (28) umfasst, der:
aktiviert ist, wenn das erste Verriegelungssegment (14a, 24) mit dem Kolben (16, 26) in Eingriff steht; und
deaktiviert ist, wenn das erste Verriegelungssegment (14a, 24) mit dem Kolben (16, 26) in Eingriff steht;

7. Verriegelbarer Teleskop-Stellantrieb nach einem der vorstehenden Ansprüche, wobei das erste SMA-Vorspannelement so angeordnet ist, dass es sich bei einer ersten vordefinierten Temperatur ausdehnt und bei einer zweiten vordefinierten Temperatur komprimiert.

8. Verriegelbarer Teleskop-Stellantrieb nach einem der vorstehenden Ansprüche, wobei das erste SMA-Vorspannelement (12, 22) elektrisch mit einer Stromquelle gekoppelt ist.

9. Fahrwerk für ein Luftfahrzeug, das einen verriegelbaren Teleskop-Stellantrieb (10, 20) nach einem der vorstehenden Ansprüche umfasst.

10. Luftfahrzeug, das einen verriegelbaren Teleskop-Stellantrieb nach einem der Ansprüche 1 bis 8 und/oder ein Fahrwerk nach Anspruch 9 umfasst.

## Revendications

1. Actionneur télescopique verrouillable (10) agencé pour être dans un état verrouillé ou dans un état déverrouillé, l'actionneur télescopique verrouillable comprenant :
un corps (15) définissant une cavité cylindrique ;
un piston (16) monté pour coulisser télescopiquement dans la cavité cylindrique ; et
un mécanisme de verrouillage comprenant :
un premier segment de verrouillage (14a), le premier segment de verrouillage étant agencé pour être mobile entre une position verrouillée et une position déverrouillée, dans lequel :
dans la position verrouillée, le premier segment de verrouillage (14a) est en prise avec le piston (16) pour empêcher que le piston (16) ne se déplace par rapport au corps (15) et
dans la position déverrouillée, le premier segment de verrouillage (14a) est désolidarisé du piston (16) pour permettre au piston (16) de se déplacer par rapport au corps (15) ; et
un premier élément de sollicitation (12) en alliage à mémoire de forme, SMA, conçu pour être étendu ou comprimé sélectivement, le premier élément de sollicitation (12) en SMA étant agencé de sorte que lorsque le premier élément de sollicitation (12) en SMA est comprimé sélectivement, le premier segment de verrouillage (14a) est sollicité dans la position verrouillée et lorsque le premier élément de sollicitation (12) en SMA est étendu sélectivement, le premier élément de verrouillage (14a) est sollicité dans la position déverrouillée, **caractérisé en ce que** :
le mécanisme de verrouillage est situé dans la cavité cylindrique et comprend en outre :
un deuxième segment de verrouillage (14b), distinct du premier segment de verrouillage (14a), le deuxième segment de verrouillage (14b) étant agencé pour être mobile entre une position verrouillée et une position déverrouillée, dans lequel :
dans la position verrouillée, le deuxième segment de verrouillage (14b) vient en prise avec le piston (16) pour empêcher que le piston (16) ne se déplace par rapport au corps (15) et
dans la position déverrouillée, le deuxième segment de verrouillage (14b) est désolidarisé du piston (16) pour permettre au piston (16) de se déplacer par rapport au corps (15) ; et dans lequel
le premier élément de sollicitation (12) en SMA est situé entre les premier et deuxième segments de verrouillage (14a, 14b) et agencé de sorte que lorsque le premier élément de sollicitation (12) en SMA est comprimé sélectivement, le deuxième élément de verrouillage (14b) est sollicité dans la position verrouillée et lorsque le premier élément de sollicitation (12) en SMA est étendu sélectivement, le deuxième élément de verrouillage (14b) est sollicité dans la position déverrouillée.

2. Actionneur télescopique verrouillable selon la revendication 1, dans lequel le mécanisme de verrouillage comprend un deuxième élément de sollicitation (13a) en SMA agencé entre le corps et le premier segment de verrouillage (14a) et un troisième élément de sollicitation (13b) en SMA agencé entre le corps et le deuxième segment de verrouillage (14b), les deuxième et troisième éléments de sollicitation (13a, 13b) en SMA étant conçus pour être sélectivement étendus ou comprimés et agencés pour :
se comprimer lorsque le premier élément de sollicitation (12) en SMA s'étend ; et
s'étendre lorsque le premier élément de sollicitation (12) en SMA se comprime.

3. Actionneur télescopique verrouillable (20) agencé pour être dans un état verrouillé ou dans un état déverrouillé, l'actionneur télescopique verrouillable comprenant :
un corps (25) définissant une cavité cylindrique ;
un piston (26) monté pour coulisser télescopiquement dans la cavité cylindrique ; et
un mécanisme de verrouillage comprenant :
un premier segment de verrouillage (24), le premier segment de verrouillage étant agencé pour être mobile entre une position verrouillée et une position déverrouillée, dans lequel :
dans la position verrouillée, le premier segment de verrouillage (24) est en prise avec le piston (26) pour empêcher que le piston (26) ne se déplace par rapport au corps (25), et
dans la position déverrouillée, le premier segment de verrouillage (24) est désolidarisé du piston (26) pour permettre au piston (26) de se déplacer par rapport au corps (25) ;
un premier élément de sollicitation (22) en alliage à mémoire de forme, SMA, conçu pour être étendu ou comprimé sélectivement, le premier élément de sollicitation (22) en SMA étant agencé de sorte que lorsque le premier élément de sollicitation (22) en SMA est comprimé sélectivement, le premier segment de verrouillage (24) est sollicité dans la position verrouillée et lorsque le premier élément de sollicitation (22) en SMA est étendu sélectivement, le premier élément de verrouillage (24) est sollicité dans la position déverrouillée, **caractérisé en ce que** :
le mécanisme de verrouillage est monté sur un boîtier (21) fixé sur une surface externe du corps (25), le premier élément de sollicitation (22) en SMA étant situé entre le boîtier (21) et le premier segment de verrouillage (24), dans lequel le premier segment de verrouillage (24) est en prise coulissante avec le boîtier (21) et dans lequel le mécanisme de verrouillage comprend un deuxième élément de sollicitation (23) en SMA situé entre le boîtier (21) et le premier segment de verrouillage (24), le deuxième élément de sollicitation (23) en SMA étant conçu pour être étendu ou comprimé sélectivement, le deuxième élément de sollicitation (23) en SMA étant agencé :
pour se comprimer lorsque le premier élément de sollicitation (22) en SMA s'étend ; et
pour s'étendre lorsque le premier élément de sollicitation (22) en SMA se comprime.

4. Actionneur télescopique verrouillable (10) agencé pour être dans un état verrouillé ou dans un état déverrouillé, l'actionneur télescopique verrouillable (10, 20) comprenant :
un corps (15) définissant une cavité cylindrique ;
un piston (16) monté pour coulisser télescopiquement dans la cavité cylindrique ; et
un mécanisme de verrouillage comprenant :
un premier segment de verrouillage (14a), le premier segment de verrouillage (14a) étant agencé pour être mobile entre une position verrouillée et une position déverrouillée, dans lequel :
dans la position verrouillée, le premier segment de verrouillage (14a) est en prise avec le piston (16) pour empêcher que le piston (16) ne se déplace par rapport au corps (15) et
dans la position déverrouillée, le premier segment de verrouillage (14a) est désolidarisé du piston (16) pour permettre au piston (16) de se déplacer par rapport au corps (15) ; et
un premier élément de sollicitation (13a) en alliage à mémoire de forme, SMA, conçu pour être étendu ou comprimé sélectivement, le premier élément de sollicitation (13a) en SMA étant agencé de sorte que lorsque le premier élément de sollicitation (13a) en SMA est étendu sélectivement, le premier segment de verrouillage (14a) est sollicité dans la position verrouillée et lorsque le premier élément de sollicitation (13a) en SMA est comprimé sélectivement, le premier élément de verrouillage (14a) est sollicité dans la position déverrouillée, **caractérisé en ce que** :
le mécanisme de verrouillage est situé dans la cavité cylindrique et comprend en outre :
un deuxième segment de verrouillage (14b), distinct du premier segment de verrouillage (14a), le deuxième segment de verrouillage étant agencé pour être mobile entre une position verrouillée et une position déverrouillée, dans lequel :
dans la position verrouillée, le deuxième segment de verrouillage (14b) vient en prise avec le piston (16) pour empêcher que le piston (16) ne se déplace par rapport au corps (15) et
dans la position déverrouillée, le deuxième segment de verrouillage (14b) est désolidarisé du piston (16) pour permettre au piston (16) de se déplacer par rapport au corps (15) ; et
un deuxième élément de sollicitation (13b) en SMA conçu pour être étendu ou comprimé sélectivement, le deuxième élément de sollicitation (13b) en SMA étant agencé de sorte que lorsque le premier élément de sollicitation (13a) en SMA est étendu sélectivement, le deuxième élément de sollicitation (13b) en SMA est étendu sélectivement et le deuxième élément de verrouillage (14b) est sollicité dans la position verrouillée et lorsque le premier élément de sollicitation (13a) en SMA est comprimé sélectivement, le deuxième élément de sollicitation (13b) en SMA est comprimé sélectivement et le deuxième élément de verrouillage (14b) est sollicité dans la position déverrouillée,
dans lequel le premier élément de sollicitation (13a) en SMA est entre le corps et le premier segment de verrouillage (14a) et le deuxième élément de sollicitation (13b) en SMA est entre le corps et le deuxième segment de verrouillage (14b).

5. Actionneur télescopique verrouillable selon l'une quelconque des revendications précédentes, dans lequel le piston (16, 26) inclut un évidement (19, 29) formé dans celui-ci et dans lequel
dans la position verrouillée, le premier segment de verrouillage (14a, 24) est au moins partiellement inséré dans l'évidement (19, 29) ; et
dans la position déverrouillée, le premier segment de verrouillage (14a, 24) est hors de l'évidement (19, 29).

6. Actionneur télescopique verrouillable selon l'une quelconque des revendications précédentes dans lequel le piston (16, 26) et/ou le premier segment de verrouillage (14a, 24) comprennent un commutateur d'indication (28) qui est :
activé lorsque le premier segment de verrouillage (14a, 24) est en prise avec le piston (16, 26) ; et
désactivé lorsque le premier segment de verrouillage (14a, 24) est en prise avec le piston (16, 26).

7. Actionneur télescopique verrouillable selon l'une quelconque des revendications précédentes dans lequel le premier élément de sollicitation en SMA est agencé pour s'étendre lorsqu'il est à une première température prédéfinie et pour se comprimer lorsqu'il est à une deuxième température prédéfinie.

8. Actionneur télescopique verrouillable selon l'une quelconque des revendications précédentes dans lequel le premier élément de sollicitation (12, 22) en SMA est électriquement couplé à une source de courant.

9. Train d'atterrissage pour un aéronef, comprenant un actionneur télescopique verrouillable (10, 20) selon l'une quelconque des revendications précédentes.

10. Aéronef comprenant un actionneur télescopique verrouillable selon l'une quelconque des revendications 1 à 8 et/ou un train d'atterrissage selon la revendication 9.
